# EUROPÄISCHE PATENTANMELDUNG

(11) **EP 2 138 260 A1**
(43) Veröffentlichungstag der Anmeldung: **30.12.2009**
(21) Anmeldenummer: 08159144.8
(22) Anmeldetag: 26.06.2008
(51) Int. Cl.: B23K 9/10, B23K 9/32, H01H 9/00

(54) **Vorrichtung und Energiequelle zum MSG-Lichtbogenschweißen und/oder -Löten mit einem stufenlos steuerbaren Leistungsteil und einem Stufenschalter**

(71) Anmelder: EWM Hightec Welding GmbH, 56271 Mündersbach (DE)
(72) Erfinder: Szczesny, Michael, 56235 Ransbach-Baumbach (DE); Szczesny, Bernd, 56271 Mündersbach (DE)

(57) **Zusammenfassung**

Eine Vorrichtung zum Lichtbogenschweißen und/oder -Löten umfassend eine elektronisch steuerbare Energiequelle mit einer über eine Steuervorrichtung gekoppelten Bedieneinheit (36), welche mindestens ein Bedienelement (46,48) umfasst, wobei über das Bedienelement (46,48) Prozessparameter ausgewählt und eingestellt werden, soll für eine möglichst einfache und sichere Bedienung ausgelegt sein, so dass Prozessparameteränderungen für die jeweilige Schweißaufgabe mit geringem Aufwand ausgewählt und eingestellt werden können. Dazu ist erfindungsgemäß ein stufenlos steuerbares Leistungsteil der Energiequelle vorgesehen, welches stufig gesteuert wird, indem das Bedienelement (46,48) als Stufenschalter ausgebildet ist und jeder Schalterstufe mindestens eine vorgebare Führungsgröße zuordenbar ist.

## Beschreibung

Die Erfindung betrifft eine Vorrichtung zum Lichtbogenschweißen und/oder - Löten umfassend eine elektronisch steuerbare Energiequelle mit einer über eine Steuervorrichtung gekoppelten Bedieneinheit, welche mindestens ein Bedienelement aufweist, wobei über das Bedienelement Prozessparameter ausgewählt und eingestellt werden.

Das Lichtbogenfügeverfahren ist ein bekannter Prozess, bei dem die Energie eines Lichtbogens, der zwischen einer Elektrode und einem Werkstück gezündet wird, zur Ausführung eines Schweiß- oder Lötprozesses verwendet wird. Grundsätzlich kann dabei unterschieden werden zwischen Verfahren mit einer abschmelzenden Elektrode, dem Metall- Schutzgas- Fügeverfahren (MSG) und Verfahren mit einer im Wesentlichen nicht abschmelzenden Elektrode, dem Wolfram- Inertgas -Fügeverfahren (WIG). Beide Verfahren können sowohl zur Herstellung einer Schweiß- als auch zur Herstellung einer Lötverbindung angewendet werden.

Grundsätzlich wird das MSG- Fügeverfahren unterteilt in Metall- Aktivgas-Fügeverfahren (MAG) und Metall- Inertgas- Fügeverfahren (MIG). Der wesentliche Unterschied liegt dabei in der Art des verwendeten Schutzgases, das heißt beim MAG- Fügeverfahren kommt ein Aktivgas, beim MIG-Fügeverfahren ein inertes Gas zum Einsatz. Das Schutzgas strömt aus einer Schutzgasdüse aus, welche die Drahtelektrode konzentrisch umgibt. Dadurch wird das Schweißgut vor dem Zutritt atmosphärischer Gase wie Sauerstoff, Wasserstoff und Stickstoff geschützt. Die Elektrode wird während des Schweißprozesses von einem Drahtvorrat mittels einer Drahtfördervorrichtung in Richtung Werkstück transportiert und somit dem Fügeprozess zugeführt.

Ebenfalls sind verschiedene Energiequellen zur Durchführung des Fügeprozesses bekannt, wie beispielsweise Gleichstromquellen, Wechselstromquellen und Wechsel-/Gleichstromquellen. Hierbei kann zwischen Transformatoren und sogenannten Invertern unterschieden werden. Bei einem Inverter als Energiequelle wird zur Bereitstellung der notwendigen Energie eine Netzspannung zuerst gleichgerichtet und dann primärseitig in eine gesteuerte energetisch nutzbare mittelfrequente Wechselspannung umgewandelt. Diese wird potentialgetrennt auf einen sekundärseitigen Schweißstromkreis transformiert und wieder gleichgerichtet.

Die sekundärseitige Prozessspannung und der sekundärseitige Prozessstrom wird einem die Steuereinrichtung taktenden Regelkreis als Istwert zugeführt, wobei die Sollwerte für den Regelkreis, das heißt für den Prozessstrom Iₛₒₗₗ und die Prozessspannung Uₛₒₗₗ in Abhängigkeit von voreinstellbaren Schweißparametern erzeugt werden. Dazu wird primärseitig der Energiequelle, durch getaktetes Ein- und Ausschalten, der vom Netz kommende elektrische Strom in kurze Abschnitte "zerteilt". Durch diese Taktung mit einer Frequenz von beispielsweise 100kHz ist es möglich, einerseits die baulichen Abmessungen des Trafos gering zu halten und andererseits aber auch eine präzise und schnelle Regelung und Steuerung der Prozessparameter zu erreichen. Die Sollwerte für Schweißparameter werden über eine mit der Steuervorrichtung gekoppelten Bedieneinheit, üblicherweise über ein als Bedienelement ausgebildetes Potentiometer stufenlos ausgewählt und eingestellt.

Weiterhin sind als Energiequellen für das MIG/MAG- Schweißen bzw. Löten Schweißgleichrichter bekannt. Der Schweißgleichrichter besteht aus einem Transformator mit nachgeschalteten Gleichrichtersätzen. Bei diesen Energiequellen wird eine Anpassung der Prozessparameter üblicherweise durch eine primärseitige Windungsanzapfung mittels Stufenschalter erreicht. Durch das Abgreifen einer unterschiedlichen Anzahl von Windungen der Primärspule des Transformators, werden das Übersetzungsverhältnis und damit der sekundärseitige Strom sowie die sekundärseitige Spannung verändert. Auf diese Weise können Prozessparameter der jeweiligen Schweißaufgabe angepasst werden.

Die MAG/MIG- Schweißvorrichtung umfasst neben der Energiequelle für den Schweiß- oder Lötprozess mindestens eine Drahtfördervorrichtung, mit deren Hilfe ein für den Schweißprozess verwendetes Zusatzmaterial in Form einer drahtförmigen Elektrode dem Fügeprozess zugeführt wird. Durch die Drahtfördervorrichtung wird die Drahtelektrode üblicherweise von einer Spule abgezogen und in Richtung Werkstück transportiert.

Die Schweißbedingungen sind neben weiteren Parametern nicht nur von Strom und Spannung abhängig, sondern außerdem auch von der Fördergeschwindigkeit der Drahtelektrode. Die Bedienungsperson der Schweißvorrichtung steht daher immer wieder vor der Aufgabe, durch manuelle Auswahl und Einstellung der einzelnen Prozessparameter diese aufeinander abzustimmen. Bei der in der Regel sich die Bedienperson auf sein Geschick und seine Erfahrung verlassen muss.

Da die manuelle Einstellung der Prozessparameter sehr schwierig ist, kann in bekannter Art und Weise zur Vereinfachung der Einstellung von Energiequelle und Drahtfördervorrichtung die Lichtbogenspannung ermittelt werden und die ermittelte Größe als Regelgröße der Drahtfördervorrichtung oder der mit Drahtfördervorrichtung gekoppelten Steuervorrichtung zugeführt werden.

Ein mit einer Drahtfördervorrichtung gekoppelter und mit einem Stufenschalter ausgestatteter Transformator ist aus dem Stand der Technik bekannt. So zeigt die DT2408004A1 eine Schweißvorrichtung, bei der über den Stufenschalter die Primärwicklungen des Transformators angezapft werden, wobei in Abhängigkeit der Einstellung am Stufenschalter eine bestimmte Vorschubgeschwindigkeit des Schweißdrahtes eingestellt wird. Derartige Schweißstromquellen weisen den Nachteil auf, dass das Übersetzungsverhältnis des Schweißtransformators starr ist und nur mittels Anzapfung der jeweiligen Primärwicklungen in wenigen Stufen unterteilbar ist. Der dabei nicht unerhebliche Vorteil der stufig einstellbaren Schweißvorrichtung ist die einfache Bedienung, wodurch die Bedienperson nach nur geringer Vorbereitungs- bzw. Einarbeitungszeit in der Lage, ist die jeweilige Schweißaufgabe zu bewerkstelligen und wodurch fehlerhafte Einstellungen durch das Bedienpersonal weitestgehend vermieden werden.

Aus der DE4041448A1 ist eine elektronisch steuerbare Schweißstromquelle bekannt, bei der durch Frequenzmodulation der primärseitigen Eingangsspannung am Transformator der sekundärseitige Ausgangsstrom in seiner Höhe unmittelbar und sehr exakt gesteuert werden kann. Außerdem sind, wie in der DE202004021031U1 offenbart, Schweißstromquellen bekannt, deren Ausgangsstrom mit Hilfe einer Pulsweiten-Modulation gesteuert wird. Mit einer derartigen Energiequelle lassen sich im Gegensatz zu einem Schweißgleichrichter neben den bereits beschriebenen Vorteilen beispielsweise auch Schwankungen im Netz ausgleichen. Ein weiterer wesentlicher Vorteil ist die Möglichkeit der stufenlosen Steuerung mit Hilfe einer stufenlosen Frequenzmodulation. Der Ausgangsstrom kann in geeigneter Weise überwacht werden, wobei sich hierdurch eine Stromregelung durch Frequenzanpassung durchführen lässt. Auch sind für elektronische Schweißstromquellen Vorrichtungen bekannt, welche eine Kopplung der Schweißspannung mit der Drahtfördergeschwindigkeit vorsehen, derart, dass beispielsweise die Schweißspannung automatisch an die Drahtfördergeschwindigkeit angepasst wird.

Üblicherweise werden die Parameter wie beispielsweise Strom, Spannung und Drahtvorschub über eine aus Bedien- und Anzeigeelementen bestehende Bedieneinheit, welche der Schweißstromquelle zugeordnet oder außerhalb der Schweißstromquelle als separate Bedienvorrichtung ausgebildet sein kann, eingestellt. Gewöhnlich werden dabei als Bedienelemente Drehknöpfe, insbesondere stufenlose Potentiometer eingesetzt.

Nachteilig ist dabei, dass die Bedienperson üblicherweise aus einer Vielzahl von möglichen Prozessparametern, durch Betätigung meist mehrerer Bedienelemente, die für die jeweilige Schweiß- oder Lötaufgabe erforderlichen Parameter auswählen und einstellen muss. Weiterhin berücksichtigen die Bedienelemente nicht, dass die Bedienperson eine Schutzausrüstung, insbesondere einen Schutzhelm und Schutzhandschuhe trägt und in der Regel auch noch in einer Hand einen Brenner hält.

Wünschenswert wäre daher eine Fügevorrichtung, bei der Prozessparameter zur Durchführung einer Vielzahl von Lichtbogen- Fügeverfahren möglichst einfach und sicher ausgewählt und eingestellt werden können. Dabei sollte die Schweiß- oder Lötvorrichtung die Vorteile der einfachen Bedienbarkeit eines Schweißgleichrichters einerseits als auch die vorteilhafte Steuerung eines Inverters andererseits in sich vereinen.

Die Erfindung liegt daher die Aufgabe zu Grunde, eine Vorrichtung zum Betreiben einer elektronisch steuerbaren Energiequelle einer Fügevorrichtung, insbesondere einer MSG- Löt- oder Schweißvorrichtung bereitzustellen, welche eine besonders einfache Auswahl einzelner oder mehrerer Prozessparameter ermöglicht ohne dabei die Einsatzmöglichkeiten der Fügevorrichtung zu verringern. Des Weiteren soll eine sichere Auswahl und Einstellung der Prozessparameter auch dann noch erfolgen können, wenn die Bedienperson durch die notwendige Schutzausrüstung ein nur eingeschränktes Sichtfeld und nur eingeschränkte Betätigungsmöglichkeiten hat.

Die Aufgabe wird erfindungsgemäß dadurch gelöst, dass ein stufenlos steuerbares Leistungsteil der Energiequelle stufig gesteuert wird, indem das Bedienelement als Stufenschalter ausgebildet ist und jeder Stufe des Stufenschalters eine vorgebbare Führungsgröße zuordenbar ist.

Die Erfindung geht dabei von der Überlegung aus, dass gerade für eine sichere und gleichzeitig aber auch einfache Bedienung der Fügevorrichtung, die Bedieneinheit mindestens ein Bedienelement aufweisen sollte, welches ausschließlich eine stufige Parameteränderung zulässt. Andererseits sollte die Bedienung der Fügevorrichtung eine ausreichende Flexibilität bei der Wahl der Prozessparameter ermöglichen um auch die Vorteile einer elektronisch steuerbaren Fügevorrichtung, dass heißt die Vielzahl der Einstellmöglichkeiten für die jeweiligen Schweiß- oder Lötaufgaben, nutzen zu können.

Dies wird dadurch erreicht, dass die Bedieneinheit mindestens ein stufig einstellbares Bedienelement aufwiest, welches mit einer Steuervorrichtung der Fügevorrichtung gekoppelt ist, wodurch die Parametereinstellung, insbesondere die Parameter Strom, Spannung sowie die Art und Geschwindigkeit der Drahtzufuhr, in vorgebbaren Stufen einstellbar sind. Dazu wird mindestens einer Schalterstufe des stufig einstellbaren Bedienelements eine Führungsgröße zugeordnet, welche vorzugsweise aus einer die Steuervorrichtung umfassende Datenbank abgerufen wird. Die vorab in der Datenbank gespeicherten Datensätze enthalten Prozessparameter als Führungsgrößen, so dass die Bedienperson mittels Einstellung am Stufenschalter, die für eine Schweiß- oder Lötaufgabe charakteristischen Prozessparameter als Sollwerte auswählen und einstellen kann.

Die Erfindung zeichnet sich insbesondere dadurch aus, dass mittels eines Steuerungs- oder Regelungsverfahrens solche Prozessparameter Berücksichtigung finden, die für die vorgesehene Schweiß- oder Lötaufgabe charakteristisch sind, wobei unter Berücksichtigung der zu den charakteristischen Prozessparametern gehörigen Datensätzen ein mathematischer Algorithmus berechnet wird, welcher als Grundlage für das Regelungsverfahren herangezogen wird. Dabei werden die am Fügeprozess messtechnisch erfassten Prozessparameter als Regelgröße, wie beispielsweise der Schweißstrom Iᵢₛₜ und die Schweißspannung Uᵢₛₜ, entsprechend den ausgewählten Prozessparametern als Führungsgrößen (Iₛₒₗₗ, Uₛₒₗₗ) eingestellt. Selbstverständlich kann die erfindungsgemäße stufig einstellbare Fügevorrichtung auch mit Hilfe einer analogen Schaltung, dass heißt ohne eine derartige Datenbank realisiert werden, indem beispielsweise den einzelnen Schalterstufen jeweils ein Spannungswert fest zugeordnet ist, welcher mit einer Führungsgröße verknüpft ist.

Gemäß einer bevorzugten Weiterbildung ist die Drahtfördervorrichtung mit der Steuervorrichtung der Fügevorrichtung gekoppelt, derart, dass zum einen die Drahtvorschubgeschwindigkeit und zum anderen vorzugsweise auch die Art der Drahtförderung voreingestellt werden kann. So ist beispielweise neben einer für die jeweilige Schweiß- oder Lötaufgabe geforderte Drahtzufuhrgeschwindigkeit auch noch eine Auswahl und Einstellung in Bezug auf eine kontinuierliche oder diskontinuierliche Drahtförderung möglich. Die Drahtförderung kann somit, über ein als Stufenschalter ausgebildetes Bedienelement, auf einfache Art und Weise gesteuert beziehungsweise geregelt werden, um zum Beispiel die Geschwindigkeit, mit der der Zusatzdraht dem Fügeprozess zugeführt werden soll, entsprechend den in der Datenbank hinterlegten Parametern eingestellt wird.
In besonders vorteilhafter Ausgestaltung ist der Stufenschalter als Drehschalter ausgebildet. Damit wird sichergestellt, dass nicht aufgrund der Schutzausrüstung, insbesondere durch das Tragen von Schutzhandschuhen, die Bedienperson versehentlich die falschen Parameter einstellen kann. Im Gegensatz zu einer Bedieneinheit unfassend eine Mehrzahl von Druck- oder Kippschaltern, wird eine fehlerhafte Auswahl des gewünschten Prozessparameters weitestgehend verhindert.

Besonders bevorzug ist jedoch ein als Codierdrehschalter ausgebildetes Bedienelement. Damit wird ermöglicht, dass selektiv eine Mehrzahl von möglichen elektrischen Kreisen über den Schalter geschlossen oder getrennt werden können.

In alternativer oder zusätzlich vorteilhafter Weiterbildung ist die Bedieneinheit mit dem erfindungsgemäßen Bedienelement außerhalb der Fügevorrichtung angeordnet. Insbesondere ist die Bedieneinheit als eine externe Bedienvorrichtung ausgebildet, welche über eine Steuerleitung oder Kabellos als Fernsteuerung mit der Fügevorrichtung verbunden ist.

Da die Drahtfördervorrichtung üblicherweise extern angeordnet ist, kann die Bedieneinheit mit dem erfindungsgemäßen Bedienelement in der Drahtfördervorrichtung integriert sein. Auch ist eine eigens für die Bedieneinheit und/oder die Drahtfördervorrichtung vorgesehene Vorrichtung denkbar, welches als Kommunikations- und Steuermittel mit der Fügevorrichtung, insbesondere mit der Steuervorrichtung der Fügevorrichtung gekoppelt ist.

In einer weiteren zweckmäßigen Ausgestaltung ist dem als Bedienelement ausgebildeten Stufenschalter mindestens ein weiteres Bedienelement zugeordnet. Dadurch wird erreicht, dass die am Stufenschalter ausgewählten Prozessparameter mittels des weiteren Bedienelements in vorgebbaren Grenzen korrigiert werden können. Die Grenzwerte und Korrekturwerte für das Korrekturbedienelement werden dazu vorzugsweise abrufbar in einer Datenbank, insbesondere in einer der Prozessparameterdatenbank zugeordneten Datenbank hinterlegt.

Das Korrekturbedienelement kann sowohl als analoges Bedienelement als auch als in Stufenschalter ausgebildet sein. Vorzugsweise ist das Korrekturbedienelement jedoch als Stufenschalter ausgebildet, wodurch auch bei der Auswahl und Einstellung der Korrekturwerte, eine sichere und flexible Steuerung, durch die den einzelnen Schalterstufen zuordenbaren Führungsgrößen, ermöglicht wird.

Die mit der Erfindung erzielten Vorteile bestehen insbesondere darin, dass ein besonders sicheres und einfaches Einstellen der Prozessparameter auch unter erschwerten Bedingungen, bedingt durch die Schutzkleidung der Bedienperson, ermöglicht wird, ohne dabei die Einsatzmöglichkeiten der Fügevorrichtung einzuschränken.

Ein Ausführungsbeispiel der Erfindung wird anhand einer Zeichnung näher erläutert. Darin zeigen:
- Fig. 1: schematisch eine Vorrichtung zum Metall-Schutzgas-Schweißen mit einer eine Bedieneinheit umfassende Drahtfördervorrichtung,
- Fig. 2: eine Bedienoberfläche der Bedieneinheit mit einem stufig einstellbaren Drehregler als Bedienelement zur Einstellung einer Drahtfördergeschwindigkeit und einem stufig einstellbaren Drehregler als Bedienelement zur Einstellung einer Korrekturspannung

Gleiche Teile sind in beiden Figuren mit denselben Bezugszeichen versehen.

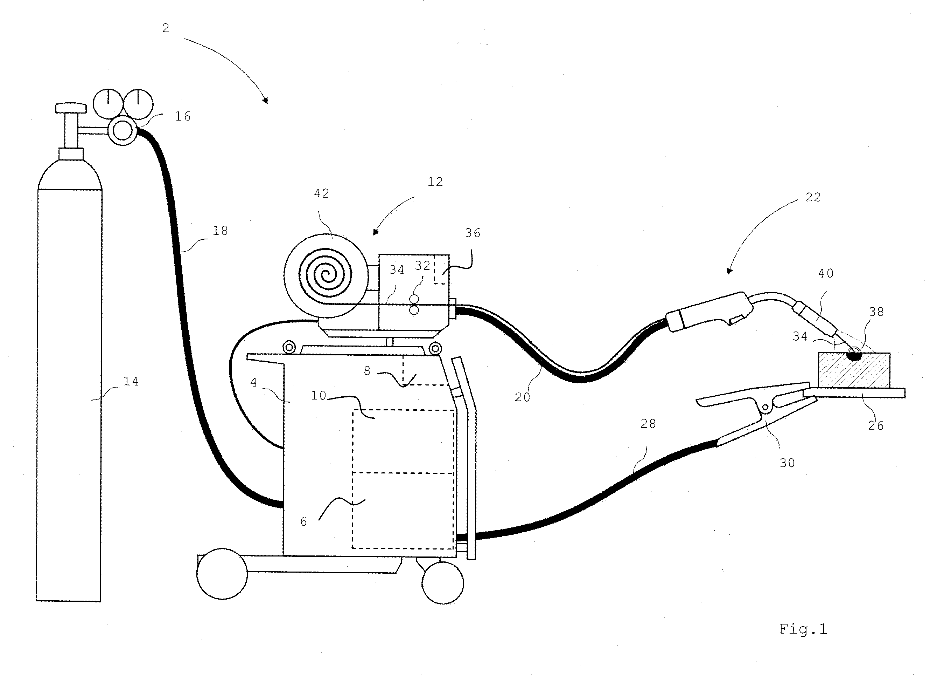

Fig. 1 zeigt eine Schweißvorrichtung 2 für ein Metall-Schutzgas-Schweißverfahren, umfassend eine Schweißstromquelle 4 mit einem Leistungsteil 6, einer Bedieneinheit 8 und einer Steuervorrichtung 10, eine der Schweißstromquelle 4 zugeordnete Drahtfördervorrichtung 12, einen Gasspeicher 14 mit einer über eine Armatur 16 hin zur Schweißstromquelle 4 verlaufenden Gasleitung 18 sowie ein über ein Schlauchpaket 20 mit der Drahtfördervorrichtung 12 gekoppelter Schweißbrenner 22. Ein Werkstück 24 ist über eine Werkstückauflage 26 mittels einer Schweißleitung 28, welche werkstücksseitig mit einer Zange 30 versehen ist, mit der Schweißstromquelle 4 elektrisch verbunden.

Die Drahtfördervorrichtung 12 umfasst einen Förderantrieb 32 für den Transport einer Drahtelektrode 34 und eine Bedieneinheit 36 zur Auswahl und Einstellung der Prozessparameter Drahtfördergeschwindigkeit Vₛₒₗₗ und Schweißspannung Uₛₒₗₗ. Die Auswahl und Einstellung der Prozessparameter Vₛₒₗₗ und Uₛₒₗₗ können wahlweise über die Bedieneinheit 36 der Drahtfördervorrichtung 12 oder über die Bedieneinheit 8 an der Schweißstromquelle 4 erfolgen. Die Voreinstellung weiterer prozessrelevanter Parameter, können über die Bedieneinheit 8 eingestellt werden.

Mittels einer Schweißleitung 38 zwischen Schweißstromquelle 4 und Werkstück 24 sowie einer hier nicht dargestellten, im Schlauchpaket 20 verlaufenden, Schweißleitung zwischen Schweißstromquelle 4 und Schweißbrenner 22, erfolgt die Zufuhr der für den Schweißprozess benötigten Energie. Dabei wird der Schweißstrom mit Hilfe einer Stromkontaktdüse am werkstückseitigen Ende des Schweißbrenners 22 auf die Drahtelektrode 34 übertragen, wodurch ein Lichtbogen 38 zwischen dem werkstückseitigen Elektrodenende und dem zu verschweißenden Werkstück 24 gezündet werden kann. Der Schweißprozess erfolgt in geschützter Atmosphäre, durch ausströmendes Schutzgas aus einer Gasdüse 40 am Schweißbrenner 22. Die Steuerung der Gaszufuhr erfolgt mittels hier nicht dargestellten Steuerventilen, welche mit Hilfe der Steuervorrichtung 10 angesteuert werden.

Der Schweißbrenner 22 ist über das Schlauchpaket 20 mit der Drahtfördervorrichtung 12 verbunden. In dem Schlauchpaket 20 verlaufen einzelne Leitungen wie die Schweißleitung, die Gasleitung 18, Kühlleitungen zur Brennerkühlung und Steuerleitungen. Die Drahtelektrode 34 wird beim Transport von einem Drahtvorrat 42 in Richtung Schweißbrenner 22 von einer Drahtseele geführt. Diese kann wie auch die anderen Leitungen im Schlauchpaket 20 angeordnet sein.

Die für den Schweißprozess erforderliche Energie wird vom Leistungsteil 6 zur Verfügung gestellt, wobei das Leistungsteil 6 mit der Steuervorrichtung 10gekoppelt ist, derart, dass über die Bedieneinheit 8 an der Schweißstromquelle 4 und/oder an der Drahtfördervorrichtung 12, mittels der Steuervorrichtung 10, die Prozessparameter für den jeweiligen Schweißprozess bzw. die unterschiedlichen Betriebsarten ausgewählt und eingestellt werden können. Dazu ist der Steuervorrichtung 10 eine Datenbank zugeordnet, in der Prozessparameter hinterlegt sind, welche durch die Bedienperson abgerufen, verändert und eingestellt werden können.

Bei den in der Datenbank hinterlegten Prozessparametern kann es sich um beliebige schweißtechnisch relevante Parameter als Sollwerte handeln, wie beispielsweise Schweißspannung Uₛₒₗₗ, Schweißstrom Iₛₒₗₗ, Leistung Pₛₒₗₗ, Darhtvorschubgeschwindigkeit Vₛₒₗₗ und Drahtdurchmesser D. Die Steuerung und/oder Regelung der Parameter erfolgt während des Schweißprozesses durch eine Anpassung der messtechnisch am Schweißprozess ermittelten Ist-Werte als Regelgröße, an die durch die Bedienperson ausgewählten Soll-Werte als Führungsgröße, welche als Parametersatz aus der Datenbank abgerufen werden.

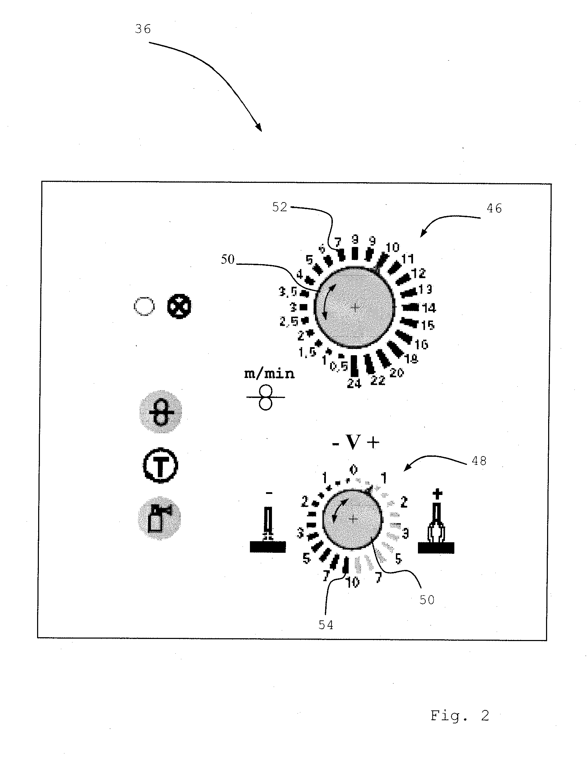

Die Bedieneinheit 36 an der Drahtfördervorrichtung 12 weist dazu auf der Bedienoberfläche 44, wie in Fig. 2 dargestellt, zwei Bedienelemente 46,48 auf, mit deren Hilfe die Drahtfördergeschwindigkeit Vₛₒₗₗ und ein Korrekturwert U_{K} für die Schweißspannung Uₛₒₗₗ einstellbar sind. Die Bedienelemente 46,48 sind dabei als Stufenschalter ausgebildet und Drehknöpfen 50 versehen. Mit der Auswahl einer Stufe für die Drahtfördergeschwindigkeit am Bedienelement 46 durch eine Bedienperson, wird ein der Stufe zugeordneter Parametersatz aus der Datenbank, mittels der Steuervorrichtung 10 in der Schweißstromquelle 4 eingestellt. Der dabei für die Schweißspannung abgerufenen Wert Uₛₒₗₗ, ist durch das Bedienelement 48 in Stufen korrigierbar. Damit wird erreicht, dass die gewünschte Lichtbogenlänge entsprechend der jeweiligen Schweißaufgabe angepasst werden kann. Neben den Einstellmöglichkeiten mittels der Bedieneinheit 36 an der Drahtfördervorrichtung 12, nämlich die Auswahl der Werte für Drahtfördergeschwindigkeit Vₛₒₗₗ und die Schweißspannung Uₛₒₗₗ beziehungsweise Korrekturspannung U_{K}, können diesen Prozessparametern und weitere Parameter mittels der Bedieneinheit 8 an der Schweißstromquelle 4 eingestellt werden.

Das Bedienelement 46 für die Einstellung der Drahtfördergeschwindigkeit Vₛₒₗₗ ist mit einer Skalierung 52 von 0,5 bis 24 versehen, wobei 23 verschiedene Stufen ausgewählt werden können. Die Einstellung über das Bedienelement 46 erfolgt zweckmäßiger Weise nicht linear, so dass eine Auswahl und Einstellung für eine Drahtfördergeschwindigkeit von 0,5 bis 4 m/min in Stufen von 0,5 m/min, für 4 bis 16 m/min in Stufen von 1 m/min und für 16 bis 24 m/min in Stufen von 2/min erfolgen kann.

Das Bedienelement 48 für die Einstellung der Korrekturspannung U_{K} ist mit einer Skalierung 54 von 0 bis 10 versehen, bei der eine Auswahl eines Korrekturspannungswertes U_{K} in Stufen von 0,5 V und in den Grenzen von - 10 V bis + 10 V möglich ist. Beispielsweise bei einer Auswahl am Bedienelement 48 von 0 V, wird in Abhängigkeit von den eingestellten Schweißprozessparametern an der Schweißstromquelle 4 und der ausgewählten Drahtfördergeschwindigkeit V am Bedienelement 46 automatisch eine Spannung Uₛₒₗₗ eingestellt.

Die Bedieneinheit 8 der Schweißstromquelle 4 ist dabei für eine Einstellung der Prozessparameter ausgelegt. Somit können einerseits die Parameter als Führungsgrößen in der Datenbank hinterlegt werden und andererseits die Führungsgrößen den Stufe der Bedienelemente 46,48 an der Drahtfördervorrichtung und/oder den stufig einstellbaren Bedienelementen an der Schweißstromquelle 4 zugeordnet werden. Dadurch können auf besonders einfache Art und Weise die Bedienelemente 46,48 entsprechend der jeweiligen Schweißaufgabe konfiguriert werden.

Die Bedieneinheit 36 der Drahtfördervorrichtung 12 ist spezifisch auf eine sichere und einfache Bedienung ausgerichtet. Durch die stufig einstellbaren Bedienelemente 46,48, welche als Stufendrehschalter ausgebildet sind, wird eine besonders einfache Bedienung dahingehend ermöglicht, dass nur die für die jeweilige Schweißaufgabe notwendigen Parameteränderungen ausgewählt werden können. Somit ist für eine Bedienung der Schweißvorrichtung 2 nicht zwingend erforderlich, dass die Bedienperson für eine meist schwierig und kompliziert zu bedienende Schweißvorrichtung 2 qualifiziert sein muss. Weiterhin können mit der erfindungsgemäßen Vorrichtung 2 die Grenzen der veränderbaren Parameter so an der Schweißstromquelle 4 eingestellt werden, dass Schweißfehler, durch fehlerhafte Bedienung der Schweißvorrichtung 2, verhindert oder aber zumindest verringert werden. Zudem ist die Bedienperson durch die erfindungsgemäße Bedieneinheit 36 in der Lage, auch ohne die Schutzhandschuhe ablegen zu müssen, Prozessparameter für die jeweilige Schweißaufgabe sicher und mit nur geringem Zeitaufwand auszuwählen und einstellen zu können.

### Bezugszeichenliste

- 2: Schweißvorrichtung
- 4: Schweißstromquelle
- 6: Leistungsteil
- 8: Bedieneinheit der Schweißstromquelle
- 10: Steuervorrichtung
- 12: Drahtfördervorrichtung
- 14: Gasspeicher
- 16: Armatur
- 18: Gasleitung
- 20: Schlauchpaket
- 22: Schweißbrenner
- 24: Werkstück
- 26: Werkstückauflage
- 28: Schweißleitung
- 30: Schweißzange
- 32: Drahtförderantrieb
- 34: Drahtelektrode
- 36: Bedieneinheit der Drahtfördervorrichtung
- 38: Schweißleitung
- 40: Gasdüse
- 42: Drahtvorrat
- 44: Bedienoberfläche
- 46: Stufendrehschalter zur Einstellung der Drahtfördergeschwindigkeit
- 48: Stufendrehschalter zur Einstellung der Korrekturspannung
- 50: Drehknopf vom Stufenschalter
- 52: Skalierung Drahtfördergeschwindigkeit
- 54: Skalierung Korrekturspannung

## Patentansprüche

1. Vorrichtung (2) zum MSG-Lichtbogenschweißen und/oder -Löten umfassend eine elektronisch steuerbare Energiequelle (4) mit einer über eine Steuervorrichtung (10) gekoppelten Bedieneinheit (8,36), welche mindestens ein Bedienelement (46) aufweist, wobei über das Bedienelement (46) Prozessparameter ausgewählt und eingestellt werden, **dadurch gekennzeichnet, dass** ein stufenlos steuerbares Leistungsteil (6) der Energiequelle (4) stufig gesteuert wird, indem das Bedienelement (46) als Stufenschalter ausgebildet ist und jeder Schalterstufe mindestens eine vorgebbare Führungsgröße zuordenbar ist.

2. Vorrichtung (2) nach Anspruch 1, **dadurch gekennzeichnet, dass** die Bedieneinheit (8,36) über die Steuervorrichtung (10) mit einer Drahtvorschubvorrichtung (12) gekoppelt ist.

3. Vorrichtung (2) nach Anspruch 1 oder 2 , **dadurch gekennzeichnet, dass** das Bedienelement (46) als Stufendrehschalter ausgebildet ist.

4. Vorrichtung nach Anspruch 3, **dadurch gekennzeichnet, dass** das Bedienelement (46) als Codierdrehschalter ausgebildet ist.

5. Vorrichtung nach einem der Ansprüche 1 bis 4, **dadurch gekennzeichnet, dass** die Bedieneinheit (8,36) extern angeordnet ist.

6. Vorrichtung nach einem der Ansprüche 1 bis 5, **dadurch gekennzeichnet, dass** dem Bedienelement (46) mindestens ein weiteres Korrekturbedienelement (48) zugeordnet ist.

7. Vorrichtung nach Anspruch 6, **dadurch gekennzeichnet, dass** das Korrekturbedienelement (48) als Stufenschalter ausgebildet ist.

8. Elektronisch steuerbare Energiequelle (4) zum MSG-Lichtbogenschweißen und/oder -Löten mit einer der Energiequelle (4) zugeordneten Bedieneinheit (8,36), welche mindestens ein Bedienelement (46) umfasst, **dadurch gekennzeichnet, dass** ein stufenlos steuerbares Leistungsteil (6) der Energiequelle (4) stufig gesteuert wird, indem das Bedienelement (46) als Stufenschalter ausgebildet ist und jeder Schalterstufe mindestens eine vorgebbare Führungsgröße zuordenbar ist.
